(19) Europäisches Patentamt

European Patent Office

Office européen des brevets

(11) Veröffentlichungsnummer: **0 197 436 B1**

(12) **EUROPÄISCHE PATENTSCHRIFT**

(45) Veröffentlichungstag der Patentschrift: **29.07.92**

(21) Anmeldenummer: **86104172.1**

(22) Anmeldetag: **26.03.86**

(51) Int. Cl.⁵: **H01H 21/02**, H02H 11/00, H02P 3/22

(54) **Schalteranordnung.**

(30) Priorität: **01.04.85 DE 3511893**
**01.04.85 DE 3511895**

(43) Veröffentlichungstag der Anmeldung:
**15.10.86 Patentblatt 86/42**

(45) Bekanntmachung des Hinweises auf die
Patenterteilung:
**29.07.92 Patentblatt 92/31**

(84) Benannte Vertragsstaaten:
**AT BE CH DE FR GB IT LI LU NL SE**

(56) Entgegenhaltungen:
DE-A- 2 624 236      DE-A- 2 655 574
DE-A- 2 802 133      DE-A- 2 842 145
DE-A- 3 220 189      DE-B- 1 515 859

(73) Patentinhaber: **BSG-Schalttechnik GmbH &
Co. KG
Meisterstrasse 19
W-7460 Balingen 1(DE)**

(72) Erfinder: **Prestel, Fritz
Giessstrasse 93
W-7461 Hausen a. Tann(DE)**

(74) Vertreter: **Otte, Peter, Dipl.-Ing.
Tiroler Strasse 15
W-7250 Leonberg(DE)**

## Beschreibung

Stand der Technik

Die Erfindung geht aus von einer Schaltungsanordnung nach dem Oberbegriff des Anspruchs 1.

Eine bekannte Schaltungsanordnung dieser Art (DE-A-2 655 574) dient der Anschaltung eines drehzahlveränderbaren, elektromotorischen Antriebs für Haushaltsgeräte, z. B. Teigrührer u. dgl. Es sind zwei Feldwicklungen in Reihe mit einem Thyristor einer Phasenanschnittsteuerung sowie dem Anker des Elektromotors geschaltet, wobei zur Schnellbremsung über eine Vielzahl von Einzelschaltern bei gleichzeitiger Abschaltung vom Netz eine selbsterregte Kurzschlußleitung aus der Reihenschaltung der Ankerwicklung mit den beiden Feldwicklungen gebildet wird, bei Herausschaltung des Reihenthyristors.

Um diese Umschaltungen vornehmen zu können, sind nicht weniger als fünf Einzelschalter vorgesehen, die dabei betätigt werden müssen, mit allen hierbei auftretenden Problemen, die hauptsächlich darauf zurückzuführen sind, daß bei zeitlich auch nur geringfügig versetzten Umschaltvorgängen die Netzanschaltung noch bestehen konnte, während der eine oder andere Schalter für die Schnellbremsung schon angesprochen hat. Dies kann zu unerwünschten Kurzschlüssen und entsprechend starkem Kontaktabbrand führen.

Die bekannte Schaltungsanordnung verfügt ferner zur abgestuften Drehzahlsteuerung über einen Stufenschalter, der eine den Thyristor steuernde Phasenanschnittschaltung mit unterschiedlichen Widerstandsverhältnissen im Eingangskreis beaufschlagt. Zur Kompensation des Temperaturgangs des Thyristors ist ein temperaturabhängiges Element in dessen Ansteuerkreis thermisch direkt mit dem Thyristor gekoppelt, nämlich beispielsweise an dessen Kühlfahne befestigt.

Wie bei der bekannten Schaltungsanordnung die Schnellbremsung abläuft und welche der nicht angegebenen Schalter zu welchen Zeitpunkten umschalten, ist nicht näher beschrieben. Ersichtlich ist jedenfalls, daß der Drehzahlstellerstufenschalter über keine Motorausschaltposition verfügt und daher der antreibende Elektromotor nur durch Betätigung der anderen vorgesehenen fünf Einzelschalter abgeschaltet werden kann; ob hierdurch gleichzeitig stets die Schnellbremsung durch Herbeiführung einer selbsterregten Kurzschlußleitung zwischen der Ankerwicklung und mindestens einer der Feldwicklungen erfolgt, ist ebenfalls nicht dargetan.

Aus der DE-B-1 515 859 ist eine Schnappschalter-Mehrfachanordnung in einer Tragsäule bekannt, bei der zwei Schnappschalter und zwischen ihnen ein gemeinsamer, elastischer Betätigungshebel gebildet sind.

Um ein möglichst gleichzeitiges Umschnappen der Kontaktarme zu gewährleisten, also gerade keine unterschiedlichen Umschaltvorgänge der beiden Schnappschalter zuzulassen, sind elastische, die jeweiligen Kontaktarme schwenkbar lagernde Schalterhebel vorgesehen, die durch den gemeinsamen Betätigungshebel verschwenkt werden können. Auf diese Weise verlagern sich die Übertotpunkte für an den Kontaktarmen angreifende Vorspannungsfedern, so daß die Umschaltung in die jeweils andere Kontaktposition der beiden Schnappschalter erfolgt.

Allgemein werden Schaltungsanordnungen zur Drehzahlsteuerung von elektrischen Maschinen, insbesondere Handarbeitsmaschinen, Elektrohandwerkzeugen, Tischmaschinen u. dgl. in Verbindung mit Phasenanschnittsteuerungen eingesetzt. Diese verfügen über einen Wechselstromschalter, der üblicherweise ein in beiden Richtungen leitend schaltbarer Triac in Reihe mit dem antreibenden Elektromotor ist, so daß dessen Drehzahl in gewünschter Weise gesteuert oder geregelt werden kann. Solche Triac-Ansteuerungen sind in vielfacher Form bekannt und häufig schon in vorgefertigten Bausteinen für jeweils gewünschte Anwendungszwecke verfügbar, wobei diese Bausteine integrierte Schaltungen enthalten, also IC's sind, die mit einer zusätzlichen äußeren Beschaltung dann die jeweils vorgesehene Aufgabe übernehmen.

Es ist auch bekannt, zusätzlich in Reihe mit dem die jeweiligen Werkzeuge oder Systeme des Geräts antreibenden Elektromotor Ein- und Ausschaltmittel anzuordnen sowie einen Lastwiderstand, wodurch der durch den Triac und notwendigerweise auch durch den Elektromotor fließende Strom erfaßt und zu Regelzwecken, beispielsweise zu einer Konstantdrehzahlregelung, die auch kontinuierlich oder stufig einstellbar ist, ausgenutzt werden kann.

Die Ansteuerung solcher Drehzahlsteuerungen kann so ausgebildet sein, daß lediglich ein Betätigungselement von der benutzenden Person zu verschieben ist, wobei zunächst ein Schalter geschaltet und anschließend beispielsweise durch Weiterschieben des Betätigungselements ein Schleifer auf einem Potentiometer verschoben werden kann, derart, daß dem IC für die Drehzahlsteuerung unterschiedliche Widerstandswerte im Ansteuerkreis des Triacs zur Verfügung gestellt werden, wodurch dieser in der Lage ist, unterschiedliche Drehzahlen vorzugeben und, durch eine entsprechende Vollwellensteuerung, auch mit Lastkompensation, -auch einzuhalten.

Problematisch kann bei solchen Steuerungen und Schaltungen der Umstand sein, daß der integrierte Baustein, also der IC sich selbst erwärmt und dann trotz konstanter äußerer Beschaltung die geregelte Größe mehr oder weniger stark wegläuft.

In diesem Zusammenhang wird, stellvertretend für eine Vielzahl von Bausteinen verwiesen auf den integrierten Schaltkreis U 210 B der Firma Telefunken, der als Drehzahlsteller mit Laststromkompensation eingesetzt werden kann, wobei durch entsprechende Wahl und Kombination einer ergänzenden äußeren Beschaltung der integriere Baustein an die jeweiligen Motoren und an die geforderten Funktionsbedingungen angepaßt werden kann. Dabei erfolgt die Drehzahlsteuerung über einen als Potentiometer vorgesehenen Drehzahlsteller, wobei bei den zu dem Schaltkreis U 210 B von der Herstellerin herausgegebenen Applikationsblättern zwar kein äußerer Netzschalter vorgesehen ist, jedoch beliebig angeordnet werden könnte.

Sehr häufig ergibt sich in diesem Zusammenhang der Wunsch, jedenfalls bestimmte, von Elektromotoren angetriebene Geräte so auszulegen, daß eine automatische Schnellstoppschaltung (Bremsung des Motors durch Kurzschließen der Feld- und Ankerwicklungen) dann erfolgt, wenn das Gerät geöffnet wird und der Benutzer sonst mit den sich schnell drehenden Teilen in eine ihn gefährdende Verbindung kommen könnte. Daher sind bestimmte Typen von Geräten, beispielsweise Küchenmaschinen, von Anfang an so ausgelegt, daß das Gerät überhaupt nur dann geöffnet werden kann, wenn man es ausschaltet, wobei entweder durch diese Ausschaltung die Öffnung mechanisch oder auf sonst geeignete Art freigegeben, gleichzeitig aber die Schnellbremsung durch Kurzschließen eingeleitet wird, mit anderen Worten, das Gerät kann gar nicht anders ausgeschaltet und dann geöffnet werden als über das Ingangsetzen der Schnellstoppschaltung (Bremsschaltung). Diese ausschließliche Möglichkeit ist aber nachteilig, weil nicht auszuschließen ist, daß durch diese ständigen Schnellbremsungen, bei denen erhebliche Kurzschlußströme fließen können, je nach Phasenlage und Drehzahlen, Beschädigungen an den Schaltern (Einbrennen) und/oder an den Ankerkohlen und/oder den Kollektorlamellen auftreten, die bis zum Verschweißen führen können. Die ständigen Kurzschluß-Schnellbremsungen bei solchen Geräten wirken sich daher besonders nachteilig auf deren Lebensdauer aus. Es sind in diesem Zusammenhang auch Geräte bekannt, die überhaupt nicht anders eingeschaltet oder ausgeschaltet werden können als durch einen solchen kombinierten Netz-Sicherheitsschalter, der dann in zum Teil komplizierter Ausbildung beim Schließen des Geräts, Aufsetzen des Deckels bei einer Küchenmaschine u.dgl. den Elektromotor an das Netz anschaltet, und beim Abheben des Deckels vom Netz abschaltet und gleichzeitig die Kurzschluß-Schnellbremsung einleitet, gegebenenfalls über mechanische Verbindungsteile.

Zweipolig schaltende Umschalter oder Ein-Ausschalter sind allgemein bekannt (DE-A-32 20 189), beispielsweise in Form einer Potentiometer-Schalterkombination, wobei bei einem unmittelbar auf einer Trägerplatte angeordneten linearen Potentiometer beidseitig zu dessen Abgriffsbahnen Schnappschalter mit ihren jeweiligen Schalthebeln so angeordnet sind, daß bei Verschieben eines den Schleifer des Potentiometers lagernden Schiebers von diesem spiegelsymmetrisch Rückflächen der Schalthebel dann betätigbar sind, wenn der Schieber eine vorgegebene Umschaltposition erreicht hat, wodurch doppelpolig elektrische Kontaktgaben erfolgen. Die gleichzeitige Umschaltung der beiden Schnappschalter erfordert in diesem Fall das Vorhandensein eines gemeinsamen Schiebeglieds, welches für das Potentiometer gleitverschieblich auf der Trägerplatte angeordnet ist; dabei sind bestimmte Vorzugs-Umschaltvorgänge der beiden gemeinsam doppelpolig schaltenden Schnappschalter nicht in dieser Veröffentlichung erwähnt. Es sind aber die Kontaktarme in jeweilige Übertotpunktpositionen vorspannende Federn vorhanden.

Bekannt ist ferner bei einem Schnappschalter (DE-A-28 02 133). die Kontaktstücke lagernden Träger sowie einen Schaltarmträger unmittelbar auf eine erste Fläche einer Leiterplatte oder Printplatte aufzusetzen und dadurch zu befestigen, daß bei diesen Träger- oder Halteteilen einstückig ausgehende, sich bis zur gegenüberliegenden Seite der Leiterplatte erstreckende und dort verlötete Verlängerungen vorgesehen sind, wobei eines der Halteteile gleichzeitig auch das Lager für den Schaltarm und sein Betätigungselement bildet. Auch hier ist eine Übertotpunktfeder vorhanden.

Der Erfindung liegt die Aufgabe zugrunde, die eingangs genannte Schalteranordnung so zu verbessern, daß sich ein möglichst geringer Verschleiß an Schaltern und insbesondere im Kohle/Kollektorbereich des Elektromotors beim Ein- und Ausschalten bzw. der Drehzahlsteuerung ergibt, wobei gleichzeitig eine Schalterausbildung mit zweipoliger Umschaltung anzugeben ist, die in diesem Zusammenhang eingesetzt werden kann.

Vorteile der Erfindung

Die erfindungsgemäße Schalteranordnung löst diese Aufgabe mit den kennzeichnenden Merkmalen des Hauptanspruchs und hat den Vorteil, daß eine voreingestellte konstante Drehzahl besonders feinfühlig eingehalten werden kann, wobei auch auf eine Lastkompensation zurückzuführende Einflüsse durch entsprechende Bemessung des mit dem IC-Baustein unmittelbar verbundenen, daher mit diesem in direkter wärmeübertragender Beziehung stehenden Schaltungselementes und seines Temperaturgangs ausgeglichen werden können.

Von besonderem Vorteil ist dabei die Möglichkeit, daß die Bedienungsperson mit dem Drehzahlsteller und bei dessen Betätigung eine als natürlichen Endwert empfundene Aus-Position für den Motor anwählen kann, wodurch die Phasenanschnittsteuerung über den integrierten Baustein (IC) so reagiert, daß der Motor stromlos geschaltet wird. Der antreibende Elektromotor kann dann auslaufen, wird also nicht in diesem Sinne durch eine Kurzschlußbremsung brutal heruntergebremst, unter besonders starker Belastung der hieran beteiligten Bauelemente, Schalter, Übergänge u.dgl. Andererseits ist aber sichergestellt, daß immer dann, wenn effektiv eine Gefährdung der Bedienungsperson auftritt, bei einer Küchenmaschine also das Gehäuse geöffnet wird und die Bedienungsperson mit der Hand an noch schnellrotierende Teile o.dgl. gelangen kann, die Schnellbremsung sofort einsetzt, also der gleiche Sicherheitsstandard eingehalten wird, wie bei solchen Geräten, die ausschließlich über die Kurzschluß-Schnellbremsung in die Aus-Position gebracht werden können. Durch die Erfindung ist daher sichergestellt, daß dort, wo eine Kurzschluß-Schnellbremsung erforderlich ist, auch so verfahren wird, andererseits aber die verschleißfreie Abschaltung und das Auslaufen des Elektromotors dann erlaubt ist, wenn dies problemlos möglich ist. Dabei ist von Vorteil daß die Bedienungsperson zuerst am Drehzahlsteller die Aus-Position einstellen kann, wodurch bis zu einem eventuellen nachfolgenden Eingriff in das Gerät, also beispielsweise beim Öffnen, eine gewisse Zeit schon vergeht und ein bestimmter Drehzahlabfall schon erreicht ist, so daß aus diesier abgefallenen Drehzahl heraus eine Kurzschluß-Schnellbremsung beim Geräteöffnen dann nicht mehr so verschleißintensive Folgen auf die beteiligten Bauelemente hat, eben weil der auftretende Kurzschlußstrom, auch in der Impulsspitze, geringer ist.

Durch die in den Unteransprüchen aufgeführten Maßnahmen sind vorteilhafte Weiterbildungen und Verbesserungen der im Hauptanspruch angegebenen Schalteranordnung möglich.

Besonders vorteilhaft ist bei der Erfindung die Erzielung einer innigen wärmetechnischen Beziehung zum die Drehzahlsteuerung bewirkenden IC dadurch, daß man einen NTC-Widerstand oder vorzugsweise eine Diode direkt auf das Gehäuse des IC aufklebt und deren Anschlüsse mit einer entsprechenden äußeren Beschaltung bzw. mit Eingängen des IC verbindet, wobei ferner im Bereich des Netzschalters gleichzeitig Mittel vorgesehen sind, die als Umschalter so ausgebildet sind, daß in der anderen Schaltposition die Kurzschluß-Schnellbremsung realisiert werden kann. Dies ist jederzeit möglich, auch dann, wenn im Bereich des Drehzahlstellers nicht vorher auf die Aus-Position gegangen ist.

Dabei läßt der verwendete Sicherheitsbremsschalter bei einfachem Aufbau eine beliebige Betätigungseinwirkung auf den Schalthebel (in vertikaler und horizontaler Richtung zur Leiterplatte, auf der er befestigt ist) zu und ermöglicht eine sichere zweipolige Umschaltung, mit dem besonderen Vorteil, daß durch die spezielle Art des Aufbaus auch bewußt zeitliche Vorgaben für die jeweilige Umschaltung getroffen werden können, so daß sich ein so gebildeter Sicherheitsschalter bei elektrischen Maschinen u.dgl. einsetzen läßt, bei denen z.B. beim Offnen, erhöhte Sicherheitsansprüche rücksichtigt werden müssen. In diesem Zusammenhang ist eine bevorzugte Einsatzmölichkeit des zweipoligen Umschalters bei solchen elektrischen Geräten gegeben, bei denen beim Abschalten unmittelbar durch Schnellbremsung der Stillstand des antreibenden Elektromotors herbeizuführen ist. Die Erfindung ermöglicht eine vereinfachte elektrische Umschaltung im Motorbereich bei schneller Bremsung mit sehr geringen Bremsströmen, insbesondere durch eine zeitlich vorgegebene und aufeinander abgestimmte Umschaltbewegung des einen Pols, der dem anderen zeitlich vorläuft.

Da die beiden Übertotpunktfedern für jeden Schaltarm des zweipoligen Sicherheitsschalters an einem gemeinsamen Schalthebel angelenkt sind, ist sichergestellt, daß die Schaltbewegungen aufeinander abgestimmt erfolgen können, wobei die Art der jeweiligen Anlenkung (Anlenkpunkte gegeneinander versetzt) und/oder die Wege, die jeder Anlenkpunkt der jeweiligen Vorspannungs- oder Übertotpunktfeder bei Betätigung des Schalthebels zurücklegt, ausschlaggebend für die zeitliche Schaltabfolge sind.

Besonders vorteilhaft ist daher die durch die Erfindung ermöglichte Bremsung von Elektromotoren durch lediglich einen zweipolig wirkenden Sicherheitsschalter mit definiertem zeitlichen Schaltungsablauf, wodurch sich die grundsätzlich für sich gesehen bekannte Bremsung von Universalmotoren, nämlich im wesentlichen Bremsung durch Umpolung des Motorankers mit Kurzschluß über die Feldwicklungen, in entscheidendem Maße vereinfacht und vor allen Dingen auch zu einer entscheidend geringeren Belastung der Kontakte des Umschalters, der Kohlen sowie der Lamellen des Motorankers führt.

Zeichnung

Ausführungsbeispiele der Erfindung sind in der Zeichnung dargestellt und werden in der nachfolgenden Beschreibung näher erläutert. Es zeigen:

Fig. 1

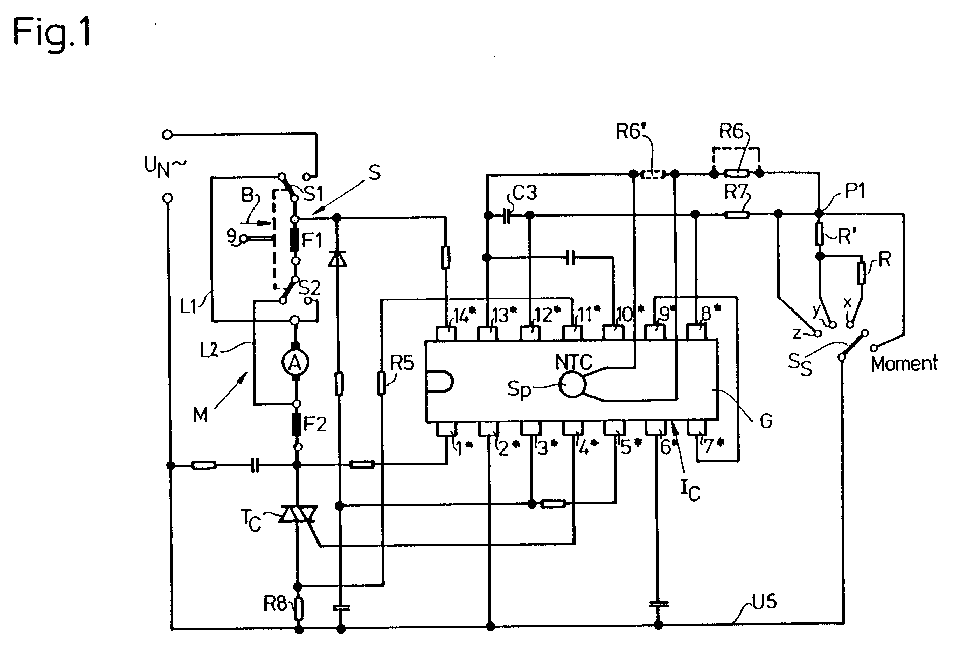

das Schaltbild eines Drehzahlstellers mit Lastkompensation unter Verwendung eines IC-Bausteins mit separatem Drehzahlsteller und Netzschalter mit Möglichkeit zur Kurzschluß-Schnellbremsung einschließlich eines den Temperaturgang des IC kompensierenden NTC-Widerstands in einer ersten Ausführungsform und
Fig. 2
eine dem Schaltbild der Fig. 1 ähnliches Ausführungsform mit einer Diode als den Temperaturgang des IC erfassendes und kompensierendes Schaltungselement,
Fig. 3
eine Draufsicht auf eine bevorzugte Ausführungsform eines zweipoligen Sicherheitsschalters;
Fig. 4
eine Seitenansicht des Sicherheitsschalters, wobei die
Fig. 4a
als Kurzdiagramm die zueinander zeitlich versetzten Ein- und Ausschaltzeiten bei (notwendigerweise) gleichzeitiger Betätigung des nur einen Schalthebels angibt;
Fig. 5a, 5b, 5c
zeigen in Form von elektrischen Schaltbildern bekannte Möglichkeiten zur Bremsung von Elektromotoren, mit zugeordnetem Bremsstrom verlauf über der Zeit in Form eines Diagramms zum Vergleich, während die
Fig. 6 und 7
Ausführungsbeispiele der Erfindung in Anwendung des erfindungsgemäßen doppelpoligen Sicherheitsschalters zur Elektromotor-Bremsung mit speziellem Schaltungsaufbau und ebenfalls zugeordneten Bremsstromverlauf-Diagrammen über der Zeit angeben.

Beschreibung der Ausführungsbeispiele

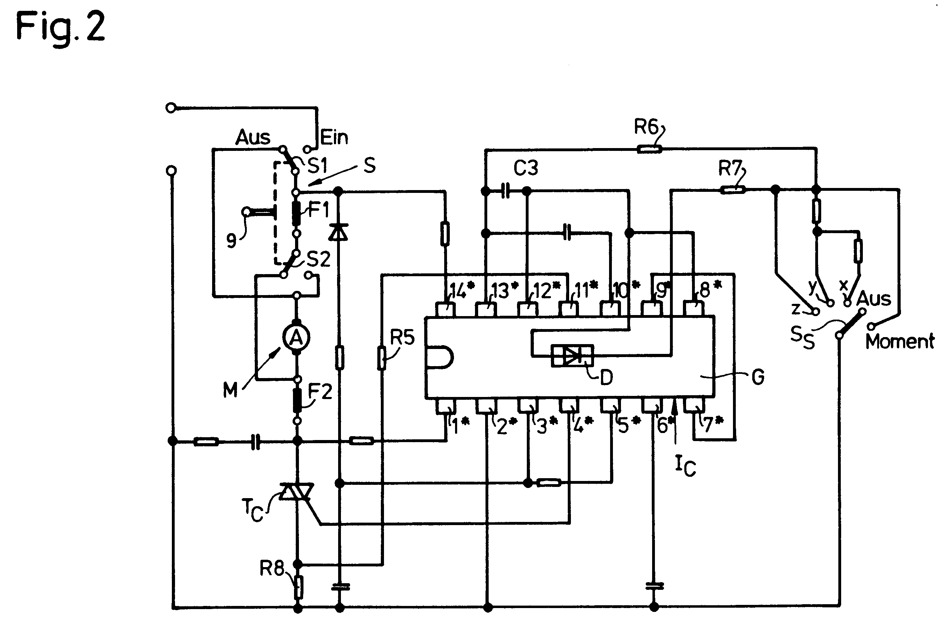

Der in den Fig. 1 und 2 als zentrales Schaltungselement in Form eines Bausteins mit integrierter Schaltung (IC) gezeigte Drehzahlsteller mit Lastkompensation ist unter der Bezeichnung U 210 B beispielsweise von Telefunkten erhältlich und steuert mit seinem Ausgang 4* den Triac Tc an, der im Stromkreis des Elektromotors M liegt, der in der Zeichnung symbolisch angedeutet ist durch eine obere Feldwicklung F1, den Anker A und eine untere Feldwicklung F2.

Die Eingangsbeschaltung zur Netzversorgung $U_N$ vervollständigt sich durch einen doppelpolig umschaltenden Sicherheitsschalters S, bestehend aus den beiden Teilumschaltern S1 und S2, die bei 9 gemeinsam über ein Stellglied, einen Nocken, einen Schalthebel, ein Betätigungselement o.dgl. betätigt werden, wobei das im folgenden lediglich noch als Betätigungselement bezeichnete Teil im anwendungsorientierten Fall einer Küchenmaschine etwa ein bei Abnahme des Deckels der Küchenmaschine betätigter Nocken oder eine Druckstange sein kann. Wird der Deckel der Küchenmaschine aufgesetzt, dann bewegt sich das Betätigungselement in Richtung des Pfeils B, so daß die beiden Teilumschalter S1 und S2 in die andere, in der Darstellung der Fig. 1 nicht gezeichnete Position umschalten; wird der Deckel abgenommen, dann bewegen sich die beiden Schalter in einer vorgegebenen zeitlichen Abfolge - im übrigen in beiden Schaltrichtungen, worauf weiter unten noch eingegangen wird -, in die entgegengesetzte Richtung. Daher zeigt die in Fig. 1 dargestellte Schalterposition von S1, S2 die Kurzschluß-Schnellschaltung bei welcher lediglich die eine Feldwicklung F1 bei einseitiger Trennung vom Netz in Reihe mit der Ankerwicklung A über die Leitungen L1 und L2 kurzgeschlossen ist. Diese Schnellstoppschaltung für den Motor, bei welcher die Sofortbremsung des Motors durch Umpolung des Motorankers und Kurzschluß der Felder über die Teilumschalter S1 und S2 durchgeführt wird, setzt im übrigen voraus - und hierbei ist der Teilumschalter S1 gleichzeitig als Netzhauptschalter eingesetzt -, daß, wie entsprechend einem Merkmal vorliegender Erfindung realisiert, der Teilumschalter S2 beim Einschalten des Geräts zeitlich zuerst, also vorlaufend zur Umschaltung des Teilumschalters S1 schaltet. Beim Ausschalten bzw. Umschalten auf Bremsung (in die dargestellte Schalterposition) muß dann beim dynamischen Schaltungsablauf der Teilumschalter S1 zuerst also zeitlich vorlaufend umschalten und anschließend der Teilumschalter S2. Hierdurch ist sichergestellt, daß der Anker A des Motors bei Schnellbremsung nicht überbrückt wird und der Strom durch die beiden Feldwicklungen F1, F2 dann den Triac Tc zerstört. Ähnliches würde beim Einschalten geschehen, wenn der Teilumschalter S1 dem Teilumschalter S2 zeitlich vorlaufend (was nicht geschehen darf) den Netzanschluß herstellt.

Auf der Drehzahlstellerseite verfügt die Schaltung der Fig. 1 anstelle eines Potentiometers über einen Stufenschalter Ss als Drehzahlsteller, der aus einer Aus-Position in jeweils höhere Drehzahlen vorgebende Schaltpositionen x, y, z umschaltbar ist; die in der Fig. 1 noch dargestellte Momentposition läßt sich dann beispielsweise durch eine getrennte Tastung durch Schalteraxialbewegung zeitweise einstellen, nicht durch eine Schalterdrehbewegung. Der Stufenschalter Ss ist daher aus der Aus-Position in die drei verschiedenen Drehzahlpositionen verstellbar und verbindet die Anschlüsse 8*, 12* und 13* der integrierten Schaltung IC mit dem anderen Spannungsanschluß (untere Stromschiene US). Die in Fig. 1 und Fig. 2 dargestellte integrierte Schaltung ist in der Lage, auch auf veränderte Belastungszustände des Motors zu reagieren, wozu der Motorstrom am Shuntwiderstand R8 über R5 ermittelt und dem Anschluß 11* der integrierten Schaltung IC zugeführt wird; eine Integration erfolgt über C3. Steigt der Motorstrom infolge größerer Belastung an, so erhöht sich die Spannung am Kondensator C3 und damit auch an dem die eigentliche Drehzahlsteuerspannung empfangenden Anschluß 8* (pin 8*). Hierdurch erhöht sich der am Triac eingesteuerte Stromflußwinkel ebenfalls, wodurch ein übermäßiger oder überhaupt ein Drehzahlabfall vermieden werden kann. Der Grad der Ausregelung der Belastungsänderung bestimmt sich durch die Werte der Widerstände R5 und insbesondere R7; diese Widerstände sind daher dem Motor bzw. den gewünschten Regeleigenschaften anzupassen. Nicht bezeichnete Schaltungselemente brauchen bei der Schaltungsbeschreibung nicht berücksichtigt zu werden, da sie zum Gegenstand der Erfindung nicht beitragen und die äußere Beschaltung durch integrierte Schaltungen für sich gesehen auch bekannt ist.

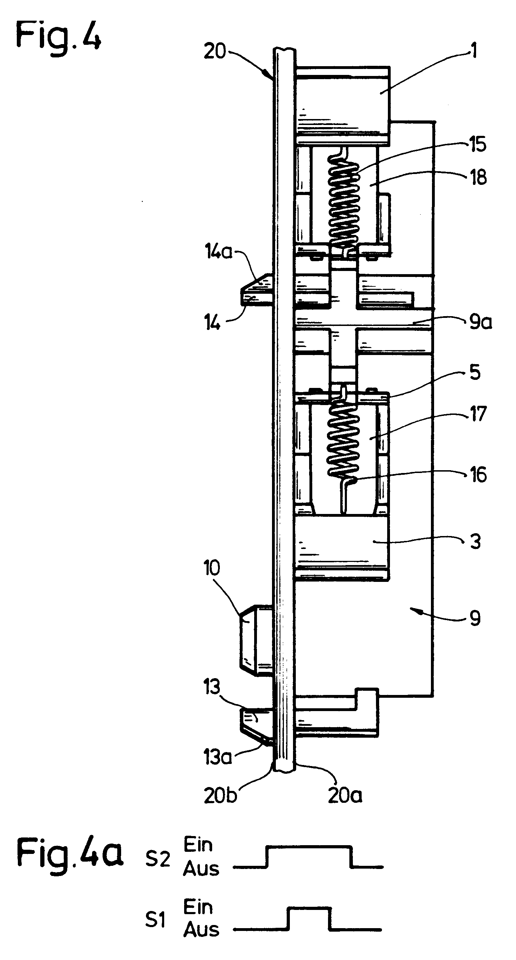

Die übliche Betätigung eines mit einer solchen Steuerschaltung entsprechend den Fig. 1 und 2 versehenen Geräts erfolgt daher so, daß nach fertigem Aufbau des Geräts, beispielsweise aufgesetztem Deckel einer Küchenmaschine die Positionen der Teilumschalter S1, S2 umgeschaltet sind und das Gerät am Netz liegt; die Einschaltung erfolgt dann separat durch Betätigung des Stufenschalters Ss als Drehzahlsteller, indem der Schalter aus der Aus-Position in eine der gewünschten Drehzahlpositionen x, y, z verdreht wird. Soll die Arbeit mit einem solchen Gerät eingestellt werden, dann wird der Benutzer als vorgängige Betätigung automatisch die Drehzahl über die Schaltstellungen des Stufenschalters Ss zurücknehmen, bis die Aus-Position wieder erreicht ist; die Stromzufuhr zum Motor M also über den Triac Tc unterbrochen wird. Der Motor läuft aus; zu jeder beliebigen Zeit davor oder danach kann das Gerät aber auch geöffnet werden, wodurch bei entsprechender Betätigung der beiden Teilumschalter S1, S2 sowohl die (einseitige) Netztrennung als auch die Kurzschluß-Schnellbremsung des Motors realisiert werden. Diese Schnellbremsung kann daher, da die Geräteöffnung vollkommen willkürlich erfolgt, soweit überhaupt erforderlich, entweder bei schon stehendem Motor erfolgen, wodurch überhaupt keine Kurzschluß-Schnellbremsung eingeleitet wird, oder zu jedem beliebigen früheren Zeitpunkt mit dann ebenfalls immer stark herabgesetzten Kurzschlußströmen und insofern im wesentlichen auch verschleißmindernd oder verschleißfrei. Voraussetzung für die Ausbildung des doppelt umschaltenden Netz-Kurzschlußbrems-Sicherheitsschalters S ist die Fähigkeit der beiden gemeinsam über das Betätigungselement zu betätigenden Teilumschalter S1 und S2, daß diese entsprechend dem Diagramm in Fig. 4a im dynamischen Ablauf umschalten, wie weiter vorn schon erläutert. Schalter mit solchen Umschaltmöglichkeiten können mechanisch so ausgelegt werden, daß dann, wenn das Betätigungselement für die Umschaltung ein einheitliches gemeinsames Bauelement ist, der eine Schalter, hier S1 dem anderen in seinen Schaltbewegungen beim Einschalten nach und beim Ausschalten zeitlich vorläuft.

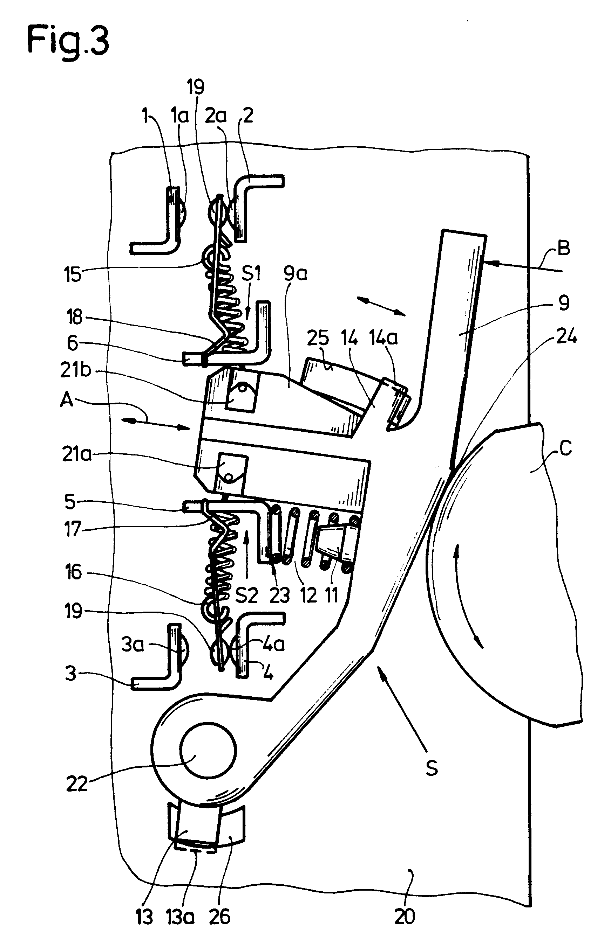

Entsprechend Fig. 3 ist in vorteilhafter Ausgestaltung das Träger- und Lagermaterial für den dargestellten doppelpoligen Sicherheitsschalters S, also mit anderen Worten sein Gehäuse, eine Trägerplatte 20, die eine Printplatte, Leiterplatte o.dgl. sein kann, die üblicherweise eine Bauelementenseite 20a und die Leiterbahnenseite 20b umfaßt (vergl. Fig. 4). Auf der Bestückungs- oder Bauelementenseite sind die Schaltungselemente und Baukomponenten des doppelpoligen Sicherheitsschalters S, der auch als Ein/Ausschalter wirkt dargestellt; dieser besteht aus dem ersten Teilumschalter S1 und dem zweiten Teilumschalter S2, die einander gegenüberliegend so angeordnet sind, daß die beiden Vorspannungs- und gleichzeitig Übertotpunktfedern 15, 16 zur beidseitigen Schaltarmbetätigung am gleichen, gemeinsamen, einer äußeren Schaltbewegung zugänglichen Betätigunselement 9 oder wie dieses im folgenden lediglich noch bezeichnet wird, Schalthebel angeordnet sind. Es sind aus einem geeigneten Material, vorzugsweise metallische, jeweils abgewinkelte Träger- oder Halteteile 1, 2, 3, 4 für die Kontaktstücke 1a, 2a, 3a und 4a vorgesehen, an welche sich die Gegenkontaktstücke 19 am jeweiligen zwischen den beiden Kontaktstücken 1a, 2a, 3a, 4a bzw. Halteteilen 1, 2, 3, 4 beweglichen Schaltarm 17, 18 zur durch eine Übertotpunktposition gesicherten Anlage anlegen.

Der jeweilige Schaltarm 17, 18 sitzt, mit seinem unteren Ende gegabelt, weil zwischen den beiden Gabelzinken die jeweilige Übertotpunktfeder 15, 16 durchläuft, an einem eigenen, kontaktgebenden Halteteil 5, 6 in einer Art Schneidenposition, ist daher leicht und frei beweglich und kippt daher, wenn sich der Schalthebel im wesentlichen längs der Richtung des Doppelpfeils A bewegt, jeweils von der zugeordneten Vorspannungsfeder 15, 16 gezogen, in die jeweils andere Schaltposition um. Die beiden Vorspannungsfedern 15, 16 sind dabei im Abstand zum Schwenkpunkt der Schaltarme 17, 18 in diese eingehängt und mit ihren anderen Enden in beidseitige Aufnahmeöffnungen 21a, 21b am Schalthebel, genauer an einem im wesentlichen rechtwinklig abzweigenden Fortsatz 9a desselben eingehängt.

Der Schalthebel hat bei 22 einen Drehpunkt mit der Leiterplatte 20, und zwar verfügt er über einen Drehzapfen 10 (Fig. 4), der durch eine entsprechende Schwenköffnung in der Leiterplatte gesteckt ist, so daß sich der Schalthebel um den Drehpunkt 22 verschwenken kann; er ist selbst vom Drehpunkt 22 ausgehend in etwa bogenförmig in der Zeichenebene der Fig. 3 nach oben verlaufend ausgebildet und ragt mit seinem vorzugsweise einstückigen Fortsatz 9a zwischen die beiden Teilumschalter S1, S2, so daß die Vorspannungsfedern 15, 16, wie erwähnt, an diesem Vorsprung eingehängt werden können.

Zur Sicherung der in Fig. 3 dargestellten Schaltposition weist der Schalthebel selbst eine eigene Vorspannungsfeder 12 auf, die sich bei 23 am Halteteil 5 des einen Teilumschalters S2 abstützt, welches gleichzeitig auch den Schaltarm 17 lagert. Gegenüberliegend umfaßt die Feder 12 einen Sicherungszapfen 11 am Schalthebel. Die Schalthebelbewegung kann dann im Grunde durch beliebige einwirkende Mittel erfolgen, beispielsweise durch eine lineare Druckwirkung entsprechend dem Pfeil B oder durch die Drehbewegung eines exzentrischen Teils C, welches auf der Rückfläche des Schalthebels bei 24 angreift und diesen zu einer Schwenkbewegung in der Zeichenebene nach links veranlaßt.

Gesichert ist der Schalthebel dadurch, daß an ihm zwei federnde Rastglieder 13 und 14 angeordnet sind, die mit Nasen 13a, 14a die Leiterplatte auf der anderen Seite hintergreifen; diese Rastglieder werden mit ihren Nasen durch vorgesehene länglich-bogenförmige Durchbrüche 25, 26 in der Leiterplatte hindurchgedrückt, woraufhin sie sich dann aufgrund ihrer mindestens teilweise federnden Eigenschaften auf der Leiterseite 20b wieder aufweiten, wodurch sind eine Verriegelung und Abstützung des Schalthebels gegen ein Abheben ergibt.

Die beiden Vorspannungs-Zugfedern 15, 16 sind in ihrer Federkraft dabei so bemessen, daß in den jeweiligen Übertotpunktpositionen des Schaltarms die erforderliche Auflagekraft an den Kontaktierungspunkten gewährleistet ist.

Die Schalterfunktion Läuft so ab, daß der Schalthebel, genauer sein Fortsatz 9a, um den Drehpunkt 22 einen Kreisbogen beschreibt; und da die beiden Einhängepunkte der Federn 15 und 16 vom Drehpunkt 22 unterschiedlich entfernt sind, legen sie auch bei gleichem Drehwinkel des Schalthebels unterschiedliche Wege zurück; diese Besonderheit nutzt die vorliegende Erfindung zu der vorteilhaften Ausgestaltung aus, die zeitlichen Ein/Ausschaltpunkte der beiden Teilumschalter S1, S2 unterschiedlich zu legen, und zwar vorzugsweise so, wie im Diagrammverlauf der Fig. 4a sehr schematisiert dargestellt.

Die Grundfunktion ist daher so, daß aufgrund der unterschiedlichen Kreisbogenkonfiguration der Schaltbewegungen für die beiden Vorspannungsfedern bei einer Betätigung des Schalthebels im Gegenuhrzeigersinn (in der Zeichenebene von rechts nach links) der Schaltarm 17 zeitlich eher in seine andere Schaltposition umschnappt und dann erst zeitlich verzögert, wie Fig. 4a zeigt, der Schaltarm 18 wegen des größeren zurückzulegenden Kreisbogens die Umschaltbewegung durchführt.

Umgekehrt, also in der Rückwärtsrichtung arbeitet der zweipolig umschaltende Sicherheitsschalter S beim Öffnen, also wenn der Schalthebel 9 sich von links nach rechts bewegt. In diesem Fall geht der Schalthebel 18 als erster in die andere Position, "öffnet" also nach einer vorgegebenen Definition und anschließend öffnet dann der Schaltarm 17 ebenfalls.

Ein solches Schaltverhalten läßt sich daher bevorzugt auf eine Einrichtung zur Bremsung beliebiger elektrischer Universalmotoren anwenden, bei denen aus Gründen der Handhabungssicherheit für den Benutzer der Wunsch oder die Notwendigkeit besteht, daß das Gerät nach dem Abschalten nach möglichst kurzer Zeit zum Stillstand kommt. Das kann der Fall sein bei Elektrowerkzeugen, Elektrohandwerkzeugen, Küchenmaschinen u.dgl., Kreissägen, Rasenmäher, Heckenscheren usw. Eine ähnliche Schnellabschaltefunktion oder Bremsung ist auch bei sehr vielen Maschinen dann vorgesehen, wenn man bestimmte Teile entfernt, das Gerät öffnet, einen Deckel abhebt o.dgl.; auch in diesem Fall wird sofort Bremsung eingeleitet, wozu man sich bestimmter Schaltungen oder Mittel zur Motorbremsung bedienen kann, die mechanischer oder auch elektrischer Art sein können. Elektrische Motorbremsen sind beispielsweise Bremsmotoren, Wirbelstrombremsen, Gleichstrombremsen, oder auch die Bremsung durch Umpolung des Motorankers mit Kurzschluß über die Feldwicklungen.

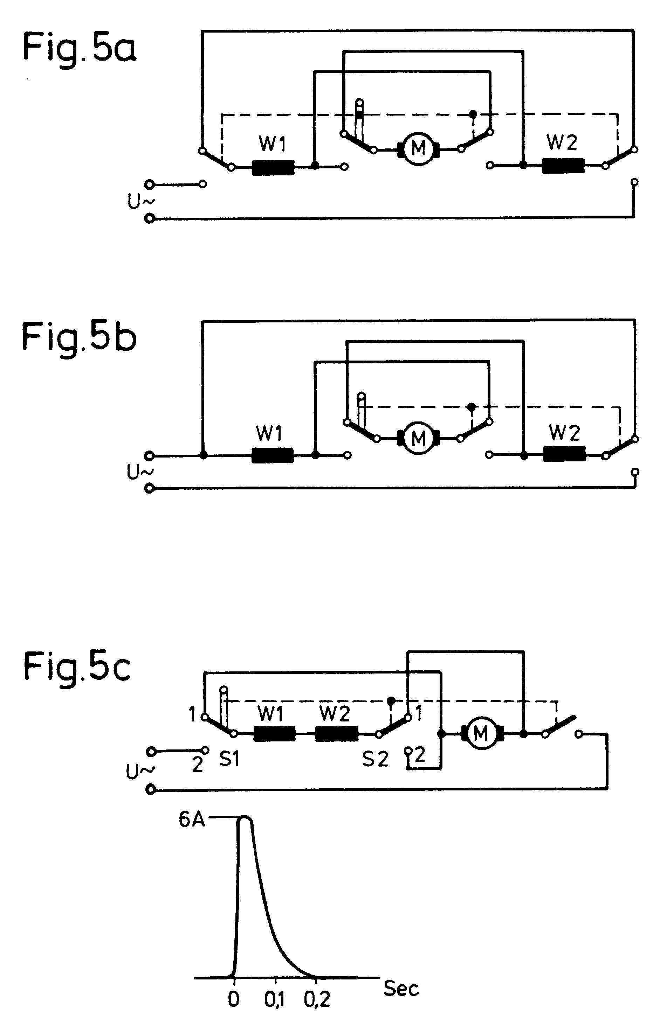

Betrachtet man in diesem Zusammenhang die bekannten Darstellungen der Fig. 5a, 5b und 5c, dann erkennt man, daß es bei der Darstellung der Fig. 5a eines Vierfach-Umschalters bedarf, um den Motor einerseits voll vom Netz zu trennen und andererseits, wie gezeigt, in der abgeschalteten Stellung über den Anker des Motors die Wicklungen W1 und W2 kurzzuschließen; um den Motor einseitig vom Netz zu trennen und eine Bremsung mit beiden Feldwicklungen W1 und W2 durchzuführen, bedarf es bei der bekannten Darstellung der Fig. 5b eines Dreifach-Umschalters, während man bei der Darstellung der Fig. 5c vollständige Trennung vom Netz vorausgesetzt, immer noch einen Zweifach-Umschalter oder zweipoligen Umschalter und einen einfachen Ein/Ausschalter benötigt, wobei jedoch elektrisch die Ankerwicklung nicht zwischen den beiden Feldwicklungen liegen darf; bei Verzicht auf vollständige Netztrennung ermöglicht die Darstellung der Fig. 5c in dieser elektrischen Schaltung die Verwendung von nur zwei Umschaltern oder eines doppelpoligen Umschalters.

Der gemeinsame Nachteil dieser bisher beschriebenen Schaltungen liegt aber darin, daß, wie der Bremsstromverlauf über der Zeit im Diagramm der Fig. 5c zeigt, infolge der dann auftretenden Generatorwirkung des Motors im Moment des Ausschaltens beim Kurzschließen zur Eigenbremsung extrem hohe Ströme auftreten, die nicht nur die Kontakte des benötigten Doppelumschalters, sondern auch die Kohlen und die Lamellen des Motorankers durch starken Verschleiß schädigen oder sogar verschweißen können.

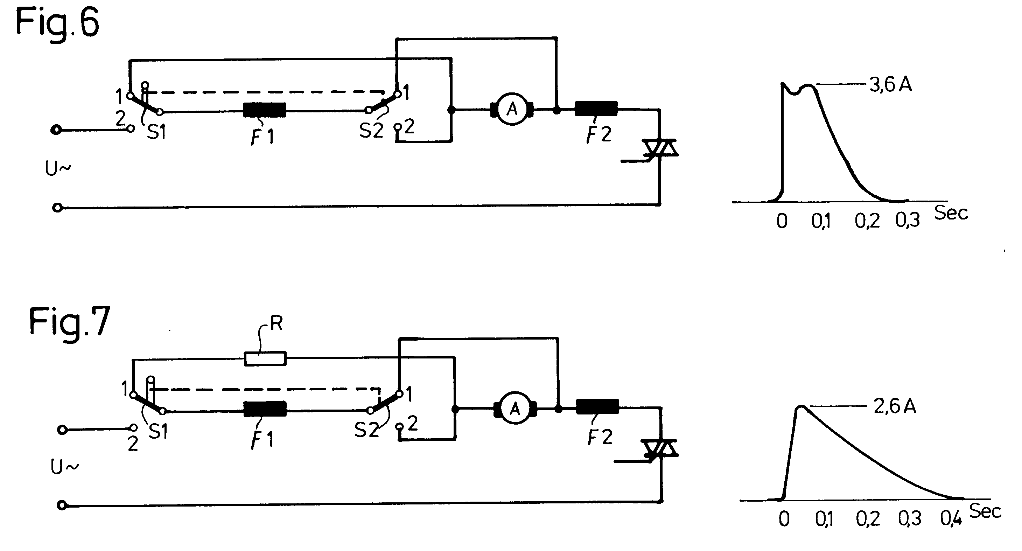

Die Erfindung ermöglicht jetzt eine wesentliche Verringerung dieser Kurzschlußströme mit nur unwesentlicher Verlängerung der Bremszeiten, wie die Diagramme zu den Schaltungen der Fig. 6 und 7 zeigen.

Benötigt wird hierzu lediglich ein zweipolig umschaltender Sicherheitsschalter wie weiter vorn angegeben, wobei bei der Schaltung der Fig. 6 - Bremsung mit einer Feldwicklung F1 und lediglich einseitiger Netztrennung - die maximal auftretende Bremsstromspitze auf etwa die Hälfte reduziert ist, verglichen mit dem Bremsstromverlauf der Fig. 5c beispielsweise, und, wie Messungen nachgewiesen haben, die Bremszeit um nur ca. 50 % größer ist, was bei Bremszeiten im Bereich von 0,2 bis 0,3 Sekunden im praktischen Fall belanglos ist. Man erkennt aber an den in den Diagrammen zu den Fig. 5c und 6 bzw. 7 gezeigten Bremsstromverläufen, daß die Strom/Zeitfläche in etwa gleich ist - dabei wurden die Messungen mit den in den Fig. 5a, 5b, 5c sowie 6 und 7 angegebenen Schaltungen an einem 500 Watt-Motor durchgeführt, mit Stillstand nach 0,2 Sekunden beim Ausführungsbeispiel der Fig. 5c und nach 0,3 bzw. 0,4 Sekunden bei den Schaltungsbeispielen der Fig. 6 und 7.

Die Schaltung der Fig. 7 unterscheidet sich von der der Fig. 6 lediglich noch durch die Einfügung eines zusätzlichen Widerstandes R im Kurzschlußkreis, wobei je nach Größe dieses Widerstandes der Strom nochmals erheblich reduziert werden kann (in numerischen Werten von 6 A Spitzenstrom bei Fig. 5c auf 3,6 A bei Fig. 6 und auf 2,6 A beim Ausführungsbeispiel der Fig. 7). Dennoch sind auch bei Einfügung des Widerstandes R, der beim dargestellten Ausführungsbeispiel beispielsweise R = 24 Ohm betragen kann, bis zum Stillstand des Motors immer noch Zeiten bis ca. 0,5 Sekunden erreichbar.

Ein bevorzugtes Einsatzgebiet des zweipolig umschaltenden Sicherheitsschalters S ist somit die Verwendung bei Motorbremsschaltungen bzw. Sicherheitsschaltungen allgemein, da auf jeden Fall einpolig vom Netz getrennt wird.

Ferner haben Untersuchungen gezeigt, daß beim Betrieb der Schaltung entsprechend den Fig. 1 und 2 eine Drehzahländerung auftritt, bedingt durch eine mögliche Eigenwärmung der integrierten Schaltung IC oder durch eine Änderung der Umgebungstemperatur. Eine hierauf zurückzuführende Drehzahländerung läßt sich dadurch auschalten, daß eine unmittelbare Temperaturkompensation vorgenommen wird. Hierzu wird ein Schaltungselement mit vorgegebenem Temperature, mit dem die integrierte Schaltung IC einschließenden Gehäuse G in direkte wärmeleitende Verbindung gebracht, beispielsweise durch Befestigen des Schaltungselements direkt auf dem IC-Gehäuse Vorzugsweise in Gehäusemitte,mittels Klebstoff, Vergußmasse o.dgl. Die elektrischen Anschlüssen dieses Schaltungselements werden mit anderen Schaltungselementen und/oder unmittelbar mit den Eingangsanschlüssen der integrierten Schaltung IC verbunden. Da auf diese Weise die IC-Temperatur unmittelbar auf dieses Kompensations-Schaltungselement übertragen wird, ist ferner lediglich noch eine solche Auswahl oder Bestimmung des Temperaturgangs dieses Schaltungselements $S_P$ erforderlich, daß die drehzahländernde Temperaturveränderung des IC kompensiert wird.

Ein erstes Ausführungsbeispiel entsprechend Fig. 1 verwendet als Schaltungselement $S_P$ einen NTC-Widerstand, dessen Anschlüsse einem Widerstand R6' parallel-geschaltet sind, der den Schaltungspunkt P1, an welchen, gegebenenfalls über Widerstände R, R' die Drehzahlsteller-Stufenkontakte angeschaltet sind, mit dem anderen Anschluß des schon erwähnten Kondensators C3 bzw. dem IC-Anschluß pin 13* verbindet. Eventuell kann dabei der Widerstand R6' auch völlig entfallen. Bei dieser Beschaltung durch einen NTC-Widerstand in wärmeleitender Verbindung mit dem IC-Gehäuse ergab sich bei entsprechend optimierter Auslegung nach dem Anschalten bei Raumtemperatur ein nur sehr geringer Drehzahlanstieg mit schneller nachfolgender Stabilisation und leichtem Drehzahlabfall bei extremer Übertemperatur, bedingt durch den Kurvengang des NTC's.

Besonders zufriedenstellende Ausführungsformen einer Temperaturkompensation ergeben sich, wenn man anstelle des NTC-Widerstandes, wie in Fig. 2 gezeigt,-sämtliche anderen Schaltungselemente der Fig. 2 entsprechen der Darstellung der Fig. 1 und brauchen daher nicht weiter erwähnt zu werden,-eine Diode D verwendet, deren Durchlaßfähigkeit sich zur Temperatur linear ändert, wodurch es bei der dargestellten Beschaltung gelingt, eine Änderung der Drehzahl zu Beginn des Temperaturanstieges sowie bei extremer Übertemperatur vollständig zu beseitigen. Die ebenfalls in inniger warmeleitender Beziehung zum Gehäuse des IC angeordnete Diode D liegt bei dem Ausführungsbeispiel der Fig. 2 in Reihe mit einem Widerstand R7 und am anderen Anschluß des Kondensators C3 (pin 12* des IC).

Ferner ist es möglich, durch entsprechende Wahl von einer oder auch mehreren dann in Reihe geschalteten Dioden bestimmte gewünschte Drehzahlverläufe über der Temperatur zu wählen.

**Patentansprüche**

1. Schaltungsanordnung für die Ein- und Ausschaltung sowie Drehzahlsteuerung von mit einem Elektromotor zu ihrem Antrieb ausgerüsteten elektrischen Geräten oder Maschinen, insbesondere Handarbeitsmaschinen, Küchenmaschinen, wie Mixer, Rührgeräte, Schnitzgeräte, Elektrowerkzeuge, wie Kreissägen, Rasenmäher oder Heckenscheren, wobei mindestens eine Feldwicklung (F1, F2) und die Ankerwicklung (A) des antreibenden Motors (M) beim Überführen in die Ausschaltposition durch Umpolen mittels einer mit dem Motor IM) in Reihe liegenden Sicherheitsschaltanordnung eine Kurzschluß-Schnellbremsung bei gleichzeitiger Netztrennung durchführen und ferner ein mit der Sicherheitsschaltanordnung nicht gekoppelter, separater, unabhängig von dieser bedienbarer Drehzahlsteller-Stufenschalter (S$_s$) vorgesehen ist, dadurch gekennzeichnet, daß die einen Sicherheitsschalter (S) bildende Sicherheitsschaltanordnung aus lediglich zwei, jeweils doppelpolig umschaltenden Teilumschaltern (S1, S2) mit ungleichen Einschaltperioden besteht und beim Überführen in die Einschaltposition den Elektromotor für den Betrieb zumindest vorbereitet und daß der Drehzahlsteller-Stufenschalter (S$_s$) eine eigene Ausschaltposition für den Elektromotor (M) aufweist, in welcher dieser bei nicht betätigtem Sicherheitsschalter (S) frei ausläuft.

2. Schaltungsanordnung nach Anspruch 1, dadurch gekennzeichnet, daß der Drehzahlsteller-Stufenschalter (S$_s$) auf die Eingangsbeschaltung einer Phasenanschnittsteuerung für die Motorstromversorgung arbeitet und zudem mehrere Drehzahlsteuerstufen (x, y, z) aufweist und daß der Sicherheitsschalter (S) in einem Triac-Kreis (Tc) des Elektromotors (M) liegt, der Teil der Phasenanschnittsteuerung ist.

3. Schaltungsanordnung nach Anspruch 1 oder 2, dadurch gekennzeichnet, daß die beiden Teilumschalter (S1, S2) des Sicherheitsschalters (S) mechanisch von einem gemeinsamen Betätigungselement (9) geschaltet sind und der erste Teilumschalter (S1) beim Überführen in die Einschaltposition eine erste Feldwicklung (F1) mit dem einen Netzanschluß und der zweite Teilumschalter (S2) diese erste Feldwicklung (F1) mit der Ankerwicklung (A) des Elektromotors (M) in Reihe schaltet, deren anderer Anschluß über eine zweite Feldwicklung (F2) und den Triac-Kreis (Tc) am anderen Netzanschluß liegt, während beim Überführen in die Ausschaltposition der erste Teilumschalter (S1) die erste Feldwicklung (F1) vom Netz trennt und in Verbindung mit dem zweiten Teilumschalter (S2) unmittelbar der Ankerwicklung parallelschaltet.

4. Schaltungsanordnung nach einem der Ansprüche 1-3, dadurch gekennzeichnet, daß die beiden Teilumschalter (S1, S2) so ausgebildet sind, daß sowohl die Ein- als auch die Ausschaltvorgänge der beiden Schalter (S1, S2) in ihrem zeitlichen Ablauf getrennt sind.

5. Schaltungsanordnung nach Anspruch 4, soweit dieser auf einen der Ansprüche 1 und 2 rückbezogen ist, dadurch gekennzeichnet, daß die Einschaltdauer eines (S1) der Teilumschalter (S1, S2) zeitlich innerhalb der Einschaltdauer des anderen Teilumschalters (S2) eingebettet ist.

6. Schaltungsanordnung nach Anspruch 4 oder 5, dadurch gekennzeichnet, daß der erste Teilumschalter (S1) dem Umschaltvorgang des zweiten Teilumschalters (S2) zeitlich nachlaufend anspricht und umgekehrt zeitlich vorlaufend eher rückschaltet als der zweite Teilumschalter (S2).

7. Schaltungsanordnung nach einem der Ansprüche 2-6, dadurch gekennzeichnet, daß die Phasenanschnittsteuerung eine den Triac-Kreis (Tc) ansteuernde integrierte Schaltung (IC) umfaßt und daß mit dem Gehäuse (G) der integrierten Schaltung (IC) ein einen vorgegebenen Temperaturgang aufweisendes elektrisches Schaltungselement in unmittelbarer wärmeleitender Verbindung steht, wobei die elektrischen Anschlüsse dieses Schaltungselements mit Schaltungskomponenten der äußeren Beschaltung der integrierten Schaltung (IC) und/oder mit Eingängen der integrierten Schaltung (IC) selbst verbunden sind derart, daß durch eine Erwärmung der integrierten Schaltung (IC) bedingte Drehzahländerungen durch die praktisch gleichzeitig erfolgende Erwärmung des Schaltungselements und dessen vorgegebenen, elektrischen Temperaturgang kompensiert sind.

8. Schaltungsanordnung nach Anspruch 7, dadurch gekennzeichnet, daß das elektrische Schaltungselement mit vorgegebenem Temperaturgang parallel oder in Reihe mit Widerständen geschaltet ist, die über den Drehzahlsteller-Stufenschalter (S$_s$) mit Eingängen der integrierten Schaltung (IC) verbunden werden.

9. Schaltungsanordnung nach Anspruch 7 oder 8, dadurch gekennzeichnet, daß das elektrische Schaltungselement mit vorgegebenem Temperaturgang ein NTC-Widerstand oder eine Diode (D) ist, der/die dadurch in unmittelbarer, wärmeleitender Beziehung mit dem Gehäuse (G) der integrierten Schaltung (IC) steht, daß er/sie auf dieses aufgeklebt, aufgekittet oder auf diesem mit Vergußmasse befestigt ist.

10. Schaltungsanordnung nach einem der Ansprüche 1-6, dadurch gekennzeichnet, daß die beiden Teilumschalter (S1, S2) auf einer gemeinsamen Trägerplatte (20) angeordnet sind und jeweils direkt durch die Trägerplatte durchgesteckte, die Kontaktstücke (1a, 2a, 3a, 4a) tragende Halteteile (1, 2, 3, 4) sowie den jeweiligen Schaltarm (17, 18) lagernde Halteteile (5, 6) umfassen, wobei das gemeinsame Betätigungselement 19) für die Schaltarmbewegung ein ebenfalls auf der Leiterplatte (20) beweglich gelagerter Schalthebel ist, an dem an einander gegenüberliegenden Stellen (21a, 21b) unmittelbar die den jeweiligen Schaltarm (17, 18) jedes Teilumschalters (S1, S2) in die jeweilige Übertotpunktposition vorspannende Federn (15, 16) angelenkt sind und der über eine eigene Vorspannungsfeder (12) in einer Vorzugs-Ruheposition gehalten ist.

11. Schaltungsanordnung nach Anspruch 10, dadurch gekennzeichnet, daß die mit einstückigen Verlängerungen durch die Trägerplatte (20) gesteckten und dort befestigten Halteteile (1, 2, 3, 4; 5, 6) für Kontaktstücke und Schaltarme als Winkelträger ausgebildet sind und die die Schaltarme (17, 18) gelenkig abstützenden Halteteile (5, 6) einander gegenüberliegend mit vorgegebenem Abstand auf der Leiterplatte (20) so angeordnet sind, daß sie zwischen sich einen Fortsatz (9a) des als Kniehebel ausgebildeten Schalthebels verschiebbar aufnehmen.

12. Schaltungsanordnung nach Anspruch 10 oder 11, dadurch gekennzeichnet, daß der Drehpunkt (22) des Schalthebels für die beiden Teilumschalter (S1, S2) außerhalb von deren Halteteilen (1, 2, 3, 4; 5, 6) jedoch auf einer im wesentlichen geradlinigen Verlängerung der beiden Schaltarme (17, 18) so auf der Leiterplatte (20) angeordnet ist, daß sich für die jeweiligen Anlenkpunkte der beiden Vorspannungsfedern (15, 16) am Fortsatz (9a) des Schalthebels unterschiedliche Kreisbögen und damit unterschiedlich zurückzulegende Wegstrecken für die jeweiligen Anlenkpunkte der beiden Vorspannungsfedern bei einer Schwenkbewegung des Schalthebels um seinen Drehpunkt ergeben und die Vorspannungsfedern so am Fortsatz (9a) gegenüberliegend angelenkt sind, daß beim Übergang in die jeweiligen Umschalt-Übertotpunktpositionen der beiden Schaltarme der zweite Teilumschalter (S2) dem ersten Teilumschalter (S1) vorauseilend umschaltet und bei der Bewegung in die jeweils andere Übertotpunktposition der erste Teilumschalter (S1) dem zweiten Teilumschalter (S2) vorauseilend rückschaltet.

13. Schaltungsanordnung nach einem der Ansprüche 10-12, dadurch gekennzeichnet, daß die Vorspannungsfeder (12) für den Schalthebel an einem Zapfen an diesem sitzt und sich andererseits am Halteteil (5) für den Schaltarm (17) des zweiten Teilumschalters (S2) abstützt.

14. Schaltungsanordnung nach einem der Ansprüche 10-13, dadurch gekennzeichnet, daß am Schalthebel federnde Rastzapfen (13, 14) mit Rastnasen (13a, 14a) angeordnet sind, die bei der Montage durch zugeordnete, die Verschwenkbewegung des Schalthebels ermöglichende länglich-bogenförmige Durchbrüche (25, 26) in der Leiterplatte (20) hindurchgedrückt werden und den Schalthebel gegen Abheben sichern, derart, daß dieser sowohl parallel zur Trägerplatte (20) als auch - bei Überkragen des Schalthebels - senkrecht zur Trägerplatte (20) antreibbar ist.

15. Schaltungsanordnung nach einem der Ansprüche 1-14, dadurch gekennzeichnet, daß eine (F1) der Feldwicklungen (F1, F2) so in Reihe mit den Teilumschaltern (S1, S2) geschaltet ist, daß diese mit ihren einpoligen Schaltarmanschlüssen an das jeweilige Wicklungsende der Feldwicklung (F1) angeschlossen sind, wobei in der Einschaltposition diese Feldwicklung in Reihe mit der Ankermotorwicklung am Netz liegt und in der Ausschaltposition mit der Ankerwicklung einen geschlossenen Kurzschlußkreis bildet und wobei durch das Nach- oder Voreilen der jeweiligen Umschaltvorgänge eine Feldwicklungsanschaltung an das Netz unter Umgehung der Ankerwicklung ausgeschlossen ist.

16. Schaltungsanordnung nach Anspruch 15, dadurch gekennzeichnet, daß im Kurzschlußkreis ein Widerstand (R) angeordnet ist.

**Claims**

1. Circuit arrangement for switching on and off and controlling the speed of electrical equipment or machines equipped with an electric motor for driving thereof, in particular handiwork machines, kitchen machines, such as mixers, stirrers, cutting equipment, electric tools, such as circular saws, lawn mowers or hedge shears, at least one field winding (F1, F2) and the armature winding (A) of the driving motor (M) performing a short-circuit rapid stop with simultaneous power isolation on transfer to the switched-off position by reversing polarity by means of a safety connection arrangement in series with the motor (M), and furthermore a separate speed adjustment step switch (S$_s$) which is not coupled to the safety connection arrangement and is operable independently thereof being provided, characterized in that the safety connection arrangement forming a safety switch (S) comprises only two part-reversing switches (S1, S2) having unequal switch-on periods and each switching over in bipolar manner, and on transfer to the switched-on position at least prepares the electric motor for operation, and in that the speed adjustment step switch (S$_s$) has its own switched-off position for the electric motor (M), in which position the latter coasts freely when the safety switch (S) is not actuated.

2. Circuit arrangement according to Claim 1, characterized in that the speed adjustment step switch (S$_s$) acts on the input circuitry of a phase-angle control for the motor power supply and moreover has a plurality of speed control stages (x, y, z), and in that the safety switch (S) is in a triac circuit (Tc) of the electric motor (M) which is part of the phase-angle control.

3. Circuit arrangement according to Claim 1 or 2, characterized in that the two part-reversing switches (S1, S2) of the safety switch (S) are switched mechanically by a common actuating element (9) and the first part-reversing switch (S1), on transfer to the switched-on position, switches a first field winding (F1) in series with one power connection and the second part-reversing switch (S2) switches this first field winding (F1) in series with the armature winding (A) of the electric motor (M), whereof the other connection is at the other power connection by way of a second field winding (F2) and the triac circuit (Tc), whereas on transfer to the switched-off position the first part-reversing switch (S1) separates the first field winding (F1) from the power and, in conjunction with the second part-reversing switch (S2), switches it in parallel directly with the armature winding.

4. Circuit arrangement according to one of Claims 1-3, characterized in that the two part-reversing switches (S1, S2) are constructed such that both the switching on and the switching off procedures of the two switches (S1, S2) are separated in their time sequence.

5. Circuit arrangement according to Claim 4, where this is related to one of Claims 1 and 2, characterized in that the switch-on duration of one (S1) of the part-reversing switches (S1, S2) is included in time within the switch-on duration of the other part-reversing switch (S2).

6. Circuit arrangement according to Claim 4 or 5, characterized in that the first part-reversing switch (S1) responds subsequently in time to the reversing process of the second part-reversing switch (S2) and, conversely, switches back earlier in time than the second part-reversing switch (S2).

7. Circuit arrangement according to one of Claims 2-6, characterized in that the phase-angle control includes an integrated circuit (IC) controlling the triac circuit (Tc), and in that an electrical circuit element having a predetermined temperature profile is in direct heat-conductive connection with the housing (G) of the integrated circuit (IC), the electrical connections of this circuit element being connected to circuit components of the outer circuitry of the integrated circuit (IC) and/or to inputs of the integrated circuit (IC) itself in such a way that changes in speed caused by heating of the integrated circuit (IC) are compensated by the virtually simultaneous heating of the circuit element and its predetermined electrical temperature profile.

8. Circuit arrangement according to Claim 7, characterized in that the electrical circuit element with a predetermined temperature profile is connected in parallel or in series with resistors which are connected by way of the speed adjustment step switch (S$_s$) to inputs of the integrated circuit (IC).

9. Circuit arrangement according to Claim 7 or 8, characterized in that the electrical circuit element with predetermined temperature profile is an NTC resistor or a diode (D) which is in direct heat-conductive relation with the housing (G) of the integrated circuit (IC) in that it is secured thereon with adhesive, cement or sealing compound.

10. Circuit arrangement according to one of Claims 1-6, characterized in that the two part-reversing switches (S1, S2) are arranged on a common support plate (20) and each have holding parts (1, 2, 3, 4) which are pushed directly through the support plate and carry the contact pieces (1a, 2a, 3a, 4a), and have holding parts (5, 6) bearing the respective switch arm (17, 18), the common actuating element (9) for the switch arm movement being a switch arm which is also mounted movably on the printed circuit board (20) and to which, at mutually opposing points (21a, 21b), the springs (15, 16) biasing the respective switch arm (17, 18) of each part-reversing switch (S1, S2) into the respective top dead centre position are directly coupled, and which is held in a preferred rest position by its own biasing spring (12).

11. Circuit arrangement according to Claim 10, characterized in that the holding parts (1, 2, 3, 4; 5, 6) pushed through the support plate (20) with one-piece extensions and secured there are constructed for contact pieces and switch arms as angular supports and the holding parts (5, 6) articulatedly supporting the switch arms (17, 18) are arranged opposite one another with predetermined spacing on the printed circuit board (20) such that they receive displaceably between them a continuation (9) to the switch lever constructed as a toggle lever.

12. Circuit arrangement according to Claim 10 or 11, characterized in that the point of rotation (22) of the switch lever for the two part-reversing switches (S1, S2), outside the holding parts (1, 2, 3, 4; 5, 6) thereof but on a substantially rectilinear extension to the two switch arms (17, 18), is arranged on the printed circuit board (20) such that, for the respective points at which the two biasing springs (15, 16) are coupled to the continuation (9a) to the switch lever, different arcs and thus different paths to be covered result for the respective coupling points of the two biasing springs during a pivotal movement of the switch lever about its point of rotation, and the biasing springs are coupled to the continuation (9a) opposite one another such that on transition into the respective reversing top dead centre positions of the two switch arms, the second part-reversing switch (S2) switches over ahead of the first part-reversing switch (S1), and on the movement into the respectively other top dead centre position the first part-reversing switch (51) switches back ahead of the second part-reversing switch (S2).

13. Circuit arrangement according to one of Claims 10-12, characterized in that the biasing spring (12) for the switch lever is seated on a peg thereon and at the other end is supported against the holding part (5) for the switch arm (17) of the second part-reversing switch (S2).

14. Circuit arrangement according to one of Claims 10-13, characterized in that there are arranged on the switch lever resilient latching pegs (13, 14) with latching noses (13a, 14a) which during assembly are pushed through associated elongate arcuate apertures (25, 26) in the printed circuit board (20), these apertures enabling the pivotal movement of the switch lever, and secure the switch lever against being lifted away such that the latter is drivable both parallel to the support plate (20) and - on projection of the switch lever - perpendicular to the support plate (20).

15. Circuit arrangement according to one of Claims 1-14, characterized in that one (F1) of the field windings (F1, F2) is connected in series with the part-reversing switches (S1, S2) such that the latter are connected by way of their single-pole switch arm connections to the respective winding end of the field winding (F1), in the switched-on position this field winding being connected in series with the armature motor winding to the power supply, and in the switched-off position this field winding forming with the armature winding a closed short-circuit loop, and as a result of the lagging or lead of the respective switch-over procedures a field winding connection to the power supply while bypassing the armature winding being prevented.

16. Circuit arrangement according to Claim 15, characterized in that a resistor (R) is arranged in the short-circuit loop.

**Revendications**

1. Dispositif d'un commutateur pour mise en circuit ou hors circuit, ainsi que pour commander la vitesse de rotation de machines ou appareils électriques équipés d'un moteur électrique pour leur entraînement, notamment des machines pour l'artisanat, des appareils ménagers tels que des mixers, agitateurs, appareils de coupe, des outils électriques tels que des scies circulaires, des tondeuses à gazon, ou des cisailles à haie, dans lequel au moins un bobinage inducteur (F1, F2) et le bobinage d'induit (A) du moteur à entraîner (M) peuvent réaliser un freinage rapide par court-circuit par déconnection simultanée du réseau par passage en position de déconnexion par inversion des pôles au moyen d'un disjoncteur de sécurité placé en série avec le moteur M, et en outre on prévoit séparément non couplé et indépendant du dispositif disjoncteur de sécurité un commutateur à gradins de réglage de vitesse de rotation ($S_s$), caractérisé en ce que le dispositif disjoncteur de sécurité formant un disjoncteur de sécurité (S) est constitué de seulement deux inverseurs partiels (S1, S2) à commutation bipolaire avec des périodes de commutation inégales et lors du passage à la position commutée, il prépare au moins le moteur électrique au fonctionnement et que le commutateur à gradins de réglage de la vitesse de rotation ($S_s$) possède sa propre position de coupure pour le moteur (M) électrique, dans laquelle celui-ci tourne librement quand le commutateur de sécurité (S) n'est pas actionné.

2. Dispositif d'un commutateur selon la revendication 1, caractérisé en ce que le commutateur à gradins de réglage de la vitesse de rotation ($S_s$) réalise sur le circuit d'entrée une commande par coupure de phase pour l'alimentation en courant du moteur et présente plusieurs gradins de variation de vitesse (x, y, z) et que le disjoncteur de sécurité (S) se trouve dans un circuit triac (Tc) du moteur électrique (M), qui est une partie de la commande par coupure de phase.

3. Dispositif d'un commutateur selon la revendication 1 ou 2, caractérisé en ce que les deux inverseurs partiels (S1, S2) du disjoncteur de sécurité (S) sont enclenchés mécaniquement par un élément (9) de commande commun, et le premier commutateur partiel (S1) par passage en position de commutation met en série un premier bobinage inducteur (F1) avec l'une des connexions au réseau et le deuxième commutateur partiel (S2) met en série ce premier bobinage inducteur (F1) avec le bobinage d'induit (A) du moteur électrique (M), dont l'autre connexion est branchée par l'intermédiaire d'un deuxième bobinage inducteur (F2) et du circuit triac (Tc) à l'autre connexion de réseau, tandis que par passage en position déconnectée, le premier inverseur partiel (S1) déconnecte le premier bobinage inducteur (F1) du réseau et le branche en parallèle directement au bobinage d'induit grâce au deuxième inverseur partiel (S2).

4. Dispositif d'un commutateur selon l'une des revendications 1-3, caractérisé en ce que les deux inverseurs partiels (S1, S2) sont constitués de telle façon que les processus de connexion et de coupure des deux commutateurs (S1, S2) sont séparés dans le temps.

5. Dispositif d'un commutateur selon la revendication 4, dans la mesure où cela se rapporte à l'une des revendications 1 et 2, caractérisé en ce que la durée de la mise en circuit d'un (S1) des inverseurs partiels (S1, S2) se trouve incluse à l'intérieur de la durée de la mise en circuit de l'autre inverseur partiel (S2).

6. Dispositif d'un commutateur selon la revendication 4 ou 5, caractérisé en ce que le premier inverseur partiel (S1) se déclenche après le processus d'inversion du deuxième commutateur partiel (S2) et inversement il commute à sa position d'orgine avant le deuxième inverseur partiel (S2).

7. Dispositif d'un commutateur selon l'une des revendications 2-6, caractérisé en ce que la commande par coupure de phase comprend un circuit intégré (IC) commandant le circuit triac et qu'un élément de commutateur présentant une plage de température prédéterminée en contact thermique direct avec le boîtier (G) du circuit intégré (IC), les connexions électriques de cet élément de circuit étant reliés aux composants de circuit de la connexion externe du circuit intégré (IC) et/ou aux entrées elles-mêmes du circuit intégré (IC), de sorte que les variations de vitesse de rotation dues à un échauffement du circuit intégré soient compensées par l'échauffement pratiquement simultané de l'élément de circuit et sa plage de température électrique prédéterminée.

8. Dispositif d'un commutateur selon la revendication 7, caractérisé en ce qu'on branche l'élément de circuit électrique avec la plage de température prédéterminée en parallèle ou en série avec des résistances, qui sont reliées via un commutateur à gradins de réglage de la vitesse de rotation ($S_s$) aux entrées d'un circuit intégré (IC).

9. Dispositif d'un commutateur selon la revendication 7 ou 8, caractérisé en ce que l'élément de circuit électrique avec une plage de température prédéterminée est une résistance NTC ou une diode (D) qui est en contact thermique direct avec le boîtier (G) du circuit intégré (IC), qu'elle est collée dessus, mastiqué ou y est fixée à l'aide d'une masse de scellement.

10. Dispositif d'un commutateur selon l'une des revendications 1-6, caractérisé en ce que les deux inverseurs partiels (S1, S2) sont disposés sur une plaque de support commune (20) (plaque de circuit imprimé) et comprennent des pièces de maintien (1, 2, 3, 4) implantées dans la plaque support, qui portent les pièces de contact (1a, 2a, 3a, 4a) ainsi que les pièces de maintien (5, 6) logeant les bras respectifs de commutation (17, 18), l'élément commun de commande (9) est un levier de commutation logé également de façon mobile sur la plaque de circuit imprimé ou plaque support (20) pour déplacer le bras de commutation sur lequel s'articulent des ressorts (15, 16) qui mettent sous contrainte dans la position correspondante au-delà du point mort, en positions opposées (21a, 21b), les bras de commutation respectifs (17, 18) de chaque inverseur partiel (S1, S2) et le levier de commutation est soumis à son propre ressort de contrainte (12) qui le maintient en position de repos préférentielle.

11. Dispositif d'un commutateur selon la revendication 10, caractérisé en ce que les pièces de maintien (1, 2, 3, 4 ; 5, 6) pour les pièces de contact et les bras de commutation qui sont fixées et implantées avec des prolongements d'une pièce dans la plaque de circuit imprimé ou plaque support (20) sont en forme d'équerre, et les pièces de maintien (5, 6) supportant de manière articulée les bras de commutation (17, 18) sont disposées face à face avec un intervalle prédéterminé sur la plaque de circuit imprimé ou plaque support (20), de façon à ce qu'elles peuvent recevoir en coulissement entre elles un prolongement (9a) du levier de commutation en forme de genouillère.

12. Dispositif d'un commutateur selon la revendication 10 ou 11, caractérisé en ce que le centre de rotation (22) du levier de commutation pour les deux inverseurs partiels (S1, S2) est placé en dehors de leurs pièces de maintien (1, 2, 3, 4 ; 5, 6) cependant sur un prolongement essentiellement linéaire des deux bras de commutation (17, 18) sur la plaque de circuit imprimé ou plaque support (20), de sorte que les points d'articulation correspondante des deux ressorts de précontrainte (15, 16) sur le prolongement (9a) du levier de commutation décrivent des arcs de cercles différents et ainsi réalisent différentes trajectoires pour les points d'articulation respectifs des deux ressorts de précontrainte, lors d'un mouvement de pivotement du levier de commutation sur son centre de rotation, et les ressorts de précontrainte sont articulés face à face sur le prolongement (9a) de telle façon que lors du passage dans les positions respectives d'inversion au-delà du point mort des deux bras de commutation, le deuxième inverseur partiel (S2) commute d'abord le premier inverseur partiel (S1) et lors du déplacement dans l'autre position au-delà du point mort du premier inverseur partiel (S1) le premier inverseur partiel (S1) commute à la position d'origine en avance, le deuxième commutateur partiel (S2).

13. Dispositif d'un commutateur selon l'une des revendications 10-12, caractérisé en ce que le ressort de précontrainte (12) du levier de commutation repose sur un tourillon placé sur lui et s'appuie d'autre part sur la pièce de maintien (5) du bras de commutation (17) du deuxième inverseur partiel (S2).

14. Dispositif d'un commutateur selon l'une des revendications 10-13, caractérisé en ce qu'on place sur le levier de commutation des tourillons d'encliquetage (13, 14) avec des nez d'encliquetage (13a, 14a) qu'on enfonce lors du montage dans des ouvertures en arc de cercle (25, 26) de la plaque de circuit imprimé ou plaque support (20) permettant le mouvement de basculement du levier de commutation et le verrouillage du levier de commutation, de sorte qu'on peut le manoeuvrer aussi bien parallèlement à la plaque de circuit imprimé ou plaque support (20) que perpendiculairement à la plaque de circuit imprimé ou plaque support (20) par encliquetage du levier de commutation.

15. Dispositif d'un commutateur selon l'une des revendications 1-14, caractérisé en ce que l'un (F1) des bobinages inducteurs (F1, F2) est branché en série avec les inverseurs partiels (S1, S2), que ceux-ci sont branchés avec leurs connexions de bras de commutation monopolaires à l'extrémité correspondante du bobinage de l'enroulement inducteur (F1), cet enroulement inducteur se trouvant en position enclenchée en série avec le bobinage d'induit et branchée au réseau, et en position déconnectée il forme un circuit fermé en court circuit avec le bobinage d'induit, et grâce à l'avance et au retard de chaque processus de commutation, on exclut un branchement de l'enroulement inducteur au réseau en dérivation.

16. Dispositif d'un commutateur selon la revendication 15, caractérisé en ce qu'on place une résistance (R) dans le circuit de court-circuit.

Fig.1

# Fig. 2

EP 0 197 436 B1

# Fig.3

## Fig.4

## Fig.4a

S2 Ein
Aus

S1 Ein
Aus

18

Fig.5a

W1  M  W2

U~

Fig.5b

W1  M  W2

U~

Fig.5c

1  W1  W2  1  M

2  S1  S2  2

U~

6A

0  0,1  0,2  Sec

# Fig.6

U~

3,6 A

0    0,1   0,2  0,3   Sec

# Fig.7

U~

2,6 A

0    0,1   0,2   0,3   0,4  Sec

EP 0 197 436 B1